# EUROPÄISCHE PATENTANMELDUNG

(11) **EP 2 063 210 A2**
(43) Veröffentlichungstag der Anmeldung: **27.05.2009**
(21) Anmeldenummer: 08405117.6
(22) Anmeldetag: 24.04.2008
(51) Int. Cl.: F28F 21/06, F24D 3/16, E04F 13/08, F28F 1/04

(54) **Klimaelement**

(30) Priorität: 12.10.2007 CH 15732007
(71) Anmelder: Thermotech Gmbh Daniel Baumann, 8952 Schlieren (CH)
(72) Erfinder: Baumann, Daniel, 8952 Schlieren (CH)

(57) **Zusammenfassung**

Die Erfindung betrifft ein Kühl- und Heizelement (in der Folge Klimaelement genannt) bestehend aus einer gelochten oder ungelochten Trockenbauplatte in welches das Profil des Kühlregisters eingefräst wird. In die gefräste Nut wird das sauerstoffdiffusionsdichte PP-R-Kühlregister (PatentNr. EP 1775506) eingelegt, vergossen und verspachtelt. Die Anschlussstutzen stehen 4-5 cm vor. Die Verbindung der Klimaelemente und der Anschluss auf das Hauptleitungsnetz erfolgt mittels Schläuchen oder Rohre. Die Klimaelemente lassen sich auf herkömmliche Weise befestigen und werden sowohl als Decken- oder Wandelemente eingesetzt.

## Beschreibung

Das Basiselement
a) Die vorliegende Erfindung bezieht sich auf ein Klimaelement mit dem Räume beheizt oder gekühlt werden können. Solcherart modifizierte Trockenbauelemente werden überall dort eingesetzt, wo Decken oder Wände formschön verkleidet werden sollen und zugleich für die Klimatisierung des Raumes benutzt werden sollen. Das Klimaelement wird sowohl im Neuwie auch Umbau eingesetzt.
b) Das Klimaelement wird ohne weitere Dämmung unter die Raumdecke gehängt oder auf die Wandkonstruktion befestigt. Dabei wird einerseits der Raum klimatisiert, gleichzeitig aber auch die dahinterliegende Bausubstanz aktiviert.
b) Nach dem Stand der Technik werden Rohre mit oder ohne Wärmleitelemente auf die Trockenbauplatten aufgelegt und mit dieser Verbunden oder in Nuten eingelegt. Bei den aufgelegten Systemen erweist sich der Wärmeleitwiderstand der Trockenbauplatten deutlich leistungsmindernd. Eingelegte Rohrsysteme erzeugen einen hohen Druckverlust, lassen daher nur kleine Wasserkreise zu und erfordern daher eine aufwendigeres Anschlusssystem.
c) Aufgabe der vorliegenden Erfindung ist es daher, dem Markt ein Trockenbauelement zur Verfügung zu stellen, mit welchem der Raum beheizt oder gekühlt werden kann, die Montage und Wartung jedoch nicht beeinflusst.
d) Die Montage und der Ablauf der Baugewerke wird durch das integrierte Klimaregister nicht tangiert, da die zur Montage der Klimaelemente erforderlichen Zonen kein mediumführendes Register enthalten.
e) Durch perforierte oder gelochte Trockenbauplatten mit integrierten Klimaregistern lässt sich Frischluft führen. Dabei wird die Leistung zusätzlich gesteigert. (siehe Beilagen: Protokoll der Werkprüfung vom 09.09.07)
f) Auf die Rückseite der Trockenbauplatte kann eine alu-kaschierte Wärmedämmung aufbringen. Dabei wird die Leistung in den Raum verstärkt und die Reaktionsschnelligkeit erhöht. Die Bausubstanz hingegen wird somit nicht aktiviert.
g) Das erfindungsgemässe Klimaelement zeichnet sich weiter durch eine einfache Montage aus, da die Klimaregister über die rückseitigen Stutzen an das Heiz- oder Kühlnetz angeschlossen werden. Der Anschluss kann sowohl mit Steckkupplungen, durch Polyfusion oder mittels Klemmen erfolgen.
h) Abhängig von der Art der Trockenbauelemente oder der aufgebrachten Beschichtungen lassen sich die Eigenschaften (zB. Akustik, Optik) der damit erstellten Decken und Wände beeinflussen.
i) Durch die Verwendung von sauerstoffdiffusionsdichten Verbindungsschläuchen kann das erfindungsgemässe Klimaelement auch an metallische Leitungsnetze angebunden werden.

## Patentansprüche

1. Das Klimaelement auf welches wir die Ansprüche erheben kennzeichnet sich durch:

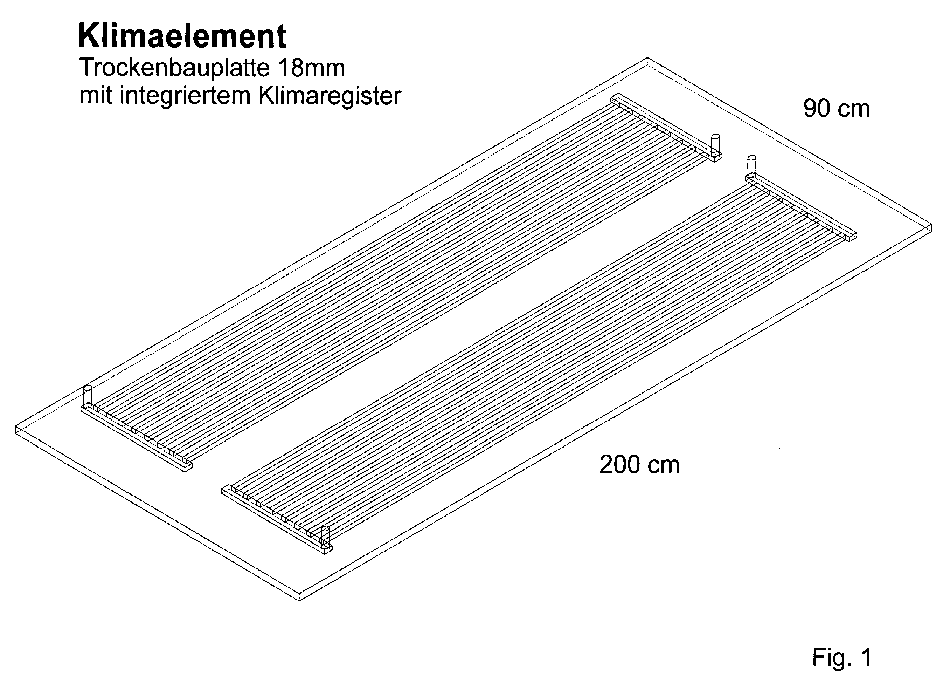

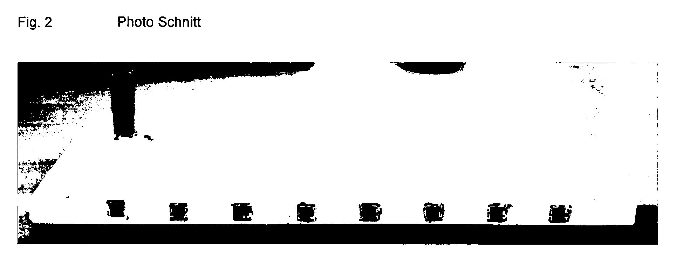

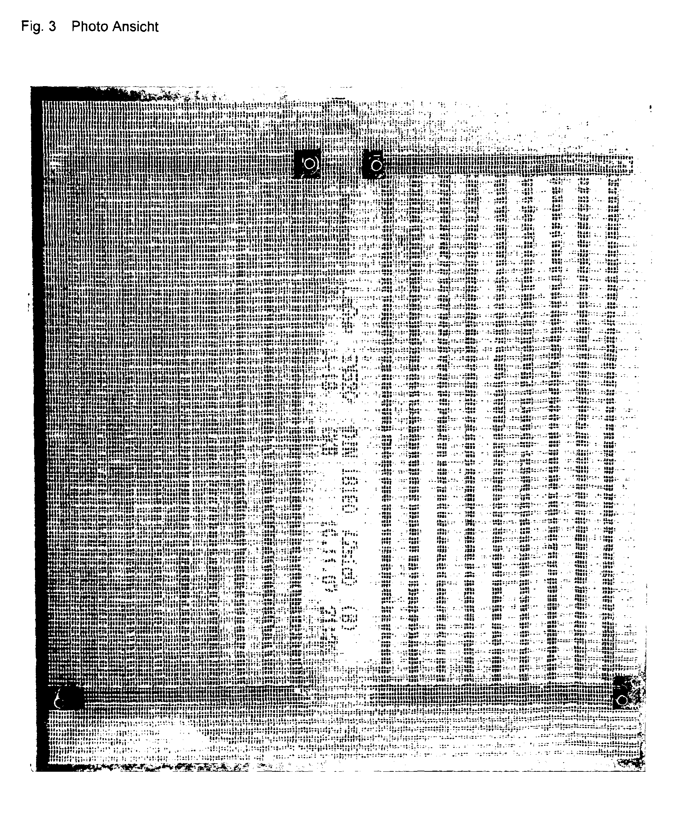

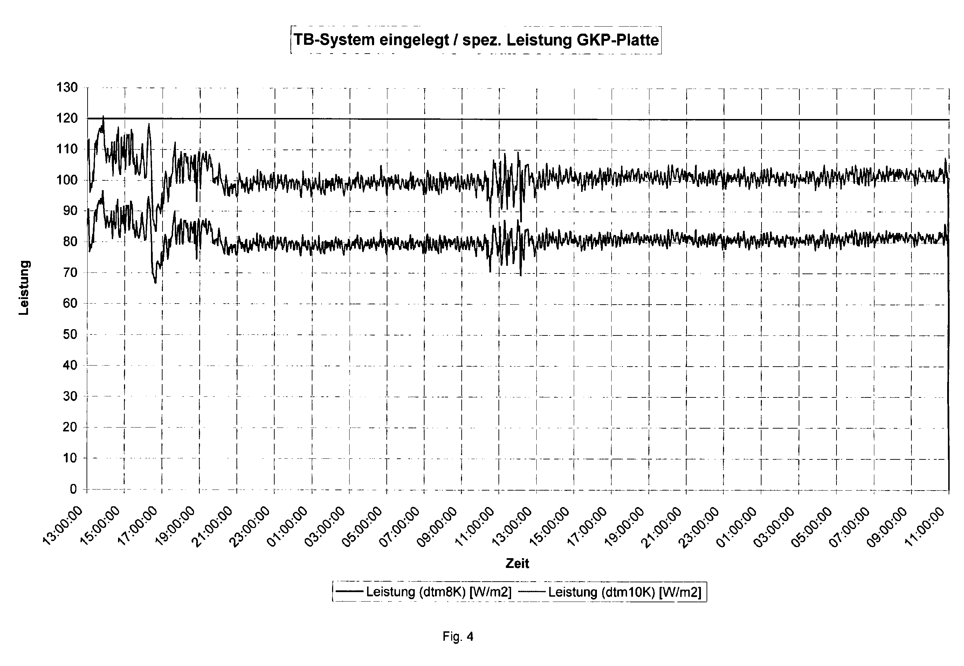

2. Trockenbauplatte mit eingefrästen Nuten in Form des zu integrierenden Klimaregisters. (siehe Skizze 1 und Photo 1 und 2)

3. Das Klimaregister besteht aus rechteckigen, sauerstoffdiffusionsdichten Kunststoffprofile

4. Das Klimaregister wird in die Nut eingelegt, verspachtelt und verschliffen.

5. Das Klimaelement wird in konventioneller Weise wie eine Trockenbauplatte montiert.

6. Die Klimaelemente lassen sich über ihre multifunktionalen Stutzen untereinander sowie mit dem Leitungsnetz verbinden
